# EUROPEAN PATENT SPECIFICATION

(11) **EP 3 220 079 B1**
(45) Date of publication and mention of the grant of the patent: **10.04.2019**
(21) Application number: 15859770.8
(22) Date of filing: 21.10.2015
(51) Int. Cl.: F25B 41/06, F16K 31/06

(54) **ELECTRONIC EXPANSION VALVE**
ELEKTRONISCHES EXPANSIONSVENTIL
SOUPAPE DE DÉTENTE ÉLECTRONIQUE

(30) Priority: 13.11.2014 CN 201410637903
(43) Date of publication of application: 20.09.2017
(73) Proprietor: Zhejiang Sanhua Intelligent Controls Co., Ltd., Shaoxing, Zhejiang 312500 (CN)
(72) Inventor: NING, Faqian Technology Center, Zhejiang 312500 (CN); ZHAN, Caiyi Technology Center, Zhejiang 312500 (CN)
(74) Representative: Maikowski & Ninnemann Patentanwälte Partnerschaft mbB
(86) International application number: PCT/CN2015/092370
(87) International publication number: WO 2016/074555

(56) References cited:
- CN-A- 101 135 386
- CN-A- 101 929 550
- CN-U- 202 158 703
- CN-U- 202 166 244
- CN-U- 202 835 954
- CN-Y- 2 797 792
- JP-A- H06 174 130
- US-A1- 2011 012 038

## Description

### FIELD

The present application relates to the technical field of refrigeration control, and particularly to an electronic expansion valve.

### BACKGROUND

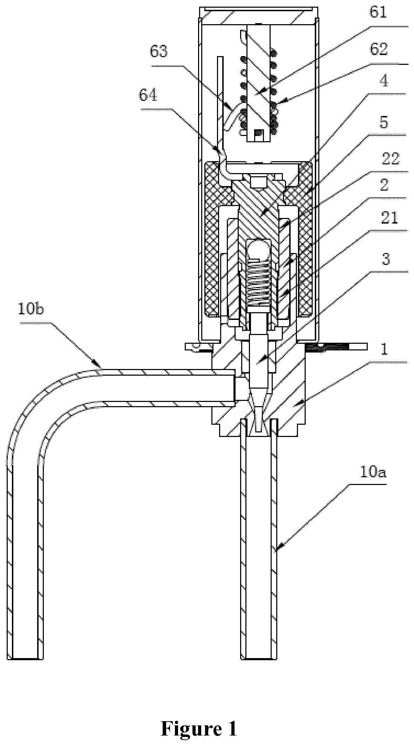

Currently, an electronic expansion valve is widely used in fluid throttling expansion and flow adjusting. Using the principle of a stepper motor, a magnetic rotor component is driven by a coil so as to rotate in forward and backward directions, thus the magnetic rotor component allows a valve needle to move up and down and change the flow area of a valve port, thereby adjusting and controlling the flow rate of a fluid medium flowing through a valve port. Figure 1 is a schematic view showing the structure of an electronic expansion valve in the conventional technology. As shown in Figure 1, the main structure of the electronic expansion valve in the conventional technology includes a valve seat 1, a nut 2, a valve needle 3, a screw rod 4, a magnetic rotor 5 and a stop assembly. A vertical pipe 10a and a lateral pipe 10b are connected to the valve seat 1 and in communication with a valve chamber of the valve seat 1. A screw rod 4 is provided to be in threaded connection with the nut 2. A lower end of the screw rod 4 is connected to the valve needle 3 and an upper end of the screw rod 4 is connected to the magnetic rotor 5. The stop assembly includes a mandrel 61, a spring rail 62, a slip ring 63 and a stop rod 64, specifically, the mandrel 61 is fixed on a housing through an end cap by welding, the spring rail 62 and the slip ring 63 are sleeved on the mandrel 61, and the stop rod 64 is fixedly connected to the screw rod 4.

The nut 2 is fixed onto the valve seat 1 and includes an internal threaded section 21 cooperated with the screw rod 4 and a guiding section 22 for guiding the screw rod 4.

When the electronic expansion valve is in operation, the magnetic rotor 5 is rotated in response to the action of a coil (not shown) and thus the screw rod 4 is rotated. Since the screw rod 4 is connected to the nut 2 by screw threads, the screw rod 4 may move up and down while rotating, thereby allowing the valve needle 3 to control a flow rate of the valve port.

In this structure, however, during the rotation of the screw rod 4 driven by magnetic rotor 5, since the threaded cooperation between the nut 2 and the screw rod 4 is guided by the guiding section 22 on the nut 2 and a certain clearance is presented in the threaded cooperation between screw threads of the nut 2 and the screw rod 4, the screw rod 4 is caused to be deviated from an central axis of the screw rod 4 during the rotation, that is, the screw rod 4 shakes in a certain degree when rotating, which causes noise in the operation of the electronic expansion valve generates . Since a clearance fit between the screw rod 4 and the nut 2 is difficult to control, it is difficult to reduce the noise by changing the dimension.

Therefore, a technical problem to be addressed presently by those skilled in the art is to design an electronic expansion valve, which can reduce noise without depending on a very precise dimension fit between the screw rod and the nut.

US 2011/012038 A1 discloses an electronic expansion valve, according to the preamble of claim 1, including a magnetic rotor and a screw rod, and further including an output shaft. The magnetic rotor is surroundingly provided on the output shaft, and the output shaft is slidably connected to the screw rod in an axial direction and drivably connected to the screw rod in a circumferential direction. Since the output shaft is slidably connected to the screw rod in an axial direction and drivably connected to the screw rod in a circumferential direction, the magnetic rotor does not subject to an axial force transmitted by the screw rod and rotates flexibly.

### SUMMARY

An object of the present application is to provide an electronic expansion valve, which effectively eliminates the technical defect that noise is produced in a conventional electronic expansion valve due to a clearance fit between the screw rod and the nut.

In order to achieve the above object, an electronic expansion valve is provided according to the present application, which includes a valve seat, a nut arranged on the valve seat, and a screw rod in cooperation with the nut by screw threads, and a noise reduction component. With rotation of a magnetic rotor, the screw rod drives a valve needle to adjust a flow rate of a valve port of the electronic expansion valve. The nut is provided with a nut guiding section, the screw rod is provided with a screw rod guiding section in cooperation with the nut guiding section. The noise reduction component is provided at an end portion, close to the nut guiding section, of the nut, and is fastened by a sleeve ring.

The sleeve ring is in a cylindrical shape and is fixed to the nut by an interference fit, and the noise reduction component is enclosed in the sleeve ring.

A distance between the sleeve ring and the nut is slightly larger than the height of the noise reduction component.

The noise reduction component is an O-ring or a rectangular ring.

An interference fit is formed between an outer periphery of the noise reduction component and an inner wall of the sleeve ring.

An interference fit is formed between an inner periphery of the noise reduction component and the screw rod.

According to the present application, the noise reduction component is provided above the nut and is fastened by the sleeve ring, so that the strength of the impact caused by the threaded cooperation between the screw rod and the nut can be alleviated, and the noise produced in operation can be reduced.

### BRIEF DESCRIPTION OF THE DRAWINGS

Figure 1 is a schematic view showing the structure of an electronic expansion valve in the conventional technology;
Figure 2 is a schematic view showing the structure of an electronic expansion valve according to the present application;
Figure 3 is a schematic view showing the structure of a first embodiment of a noise reduction component of the electronic expansion valve according to the present application;
Figure 4 is a structural schematic view of a second embodiment of the noise reduction component of the electronic expansion valve according to the present application; and
Figure 5 is a structural schematic view of a third embodiment of the noise reduction component of the electronic expansion valve according to the present application.

### DETAILED DESCRIPTION

The technical solutions of the present application will be further described hereinafter in detail with reference to the drawings and embodiments.

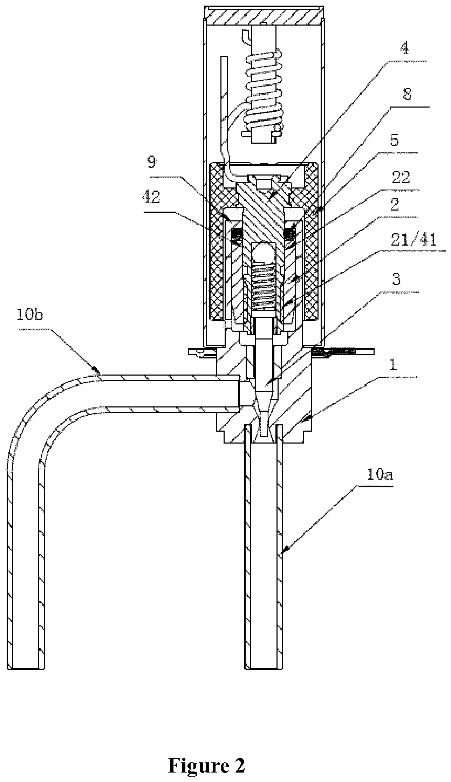

Reference is made to Figure 2, which is a schematic view showing the structure of a first embodiment of an electronic expansion valve according to the present application. In order to facilitate the description of the differences between the present application and the conventional technology, same reference numbers are used for components having the same structure and performing the same function as those in the conventional technology.

As shown in Figure 2, the main structure of the electronic expansion valve according to this embodiment includes a valve seat 1, to which a vertical connecting pipe 10a and a lateral connecting pipe 10b are connected, respectively, and each of the vertical connecting pipe 10a and the lateral connecting pipe 10b is in communication with a valve chamber of the valve seat 1. The valve seat is fixedly provided with a housing, and the housing and the valve seat 1 enclose a chamber, in which a magnetic rotor 5 is provided for being rotated in response to an electromagnetic coil. The magnetic rotor 5 and the screw rod 4 are fastened together by injection molding or riveting or the like. Thus, while the magnetic rotor 5 is rotated, the magnetic rotor 5 drives the screw rod 4 to rotate together.

The screw rod 4 and the nut 2 are connected together by means of threaded cooperation. Specifically, a lower end portion of the nut 2 is provided with an internal threaded section 21, and an upper end portion of the nut 2 is provided with a guiding section 22. Accordingly, an outer periphery of the screw rod 4 is provided with an external threaded section 41, which can be in cooperation with the internal threaded section 21, and meanwhile the screw rod guiding section 42 of the screw rod 4 is guided by the guiding section 22 of the nut 2. In this way, while the magnetic rotor 5 drives the screw rod 4 to rotate, the valve needle 3 is driven by the screw rod 4 and moved up and down with under the action of a threaded pair, which may precisely control a flow rate of a valve port provided on the valve seat 1.

In order to define a displacement range of the valve needle 3, a stop mechanism is generally provided in the electronic expansion valve, and reference may be made to the related description of the conventional technology, which is not described herein.

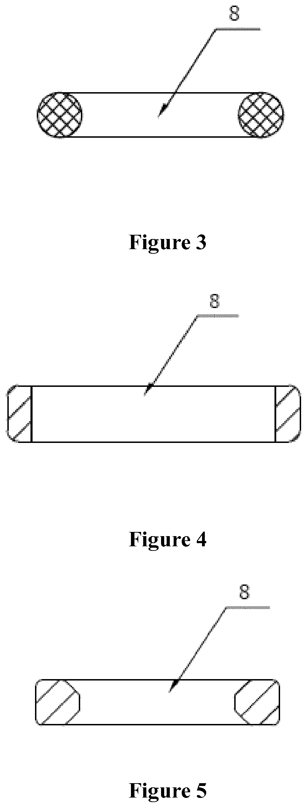

A noise reduction component 8 is provided at the upper end portion of the nut 2. The noise reduction component 8 may be an O-ring (that is, the longitudinal section is substantially circular). In this embodiment, for the convenience of description, the noise reduction component 8 is described by taking the O-ring as an example, as shown in Figure 3. In order to fix the O-ring, a sleeve ring 9 is further provided at the upper end portion of the nut 2. The sleeve ring 9 is generally of an inverted cylindrical shape, which is in an interference fit with the nut 2. In this way, the O-ring can be prevented from being deviated, jittered, or displaced, and also can be ensured not to fall off when subjected to a tension.

An inner hole of the O-ring is in a slight interference fit with the screw rod guiding section 42, and an outer diameter of the O-ring is sized so as to allow the O-ring to be in an interference fit with the sleeve ring 9. Since an inner side and an outer side of the O-ring are in an interference fit state, shaking of the screw rod 4 can be reduced effectively and the screw rod 4 can be held at a central axis, so that the strength of the impact between the external threaded section 41 of the screw rod 4 and the internal threaded section 21 of the nut 2 is reduced, and the produced noise in operation is reduced. When the electronic expansion valve enters into a stop state, since the magnetic rotor 5 may rebound by a small angle when the magnetic rotor 5 is stopped, and the rebound speed and frequency are very high, loud noise may be produced in the stopping state if a deceleration mechanism or damping mechanism is not provided at all when the magnetic rotor 5 is rebounding. In this embodiment, since the noise reduction component 8 is provided, which has the elastic property and is in a slight interference fit, the technical issue can be effectively addressed.

Further, since the O-ring has a certain elasticity and good lubrication performance, even if the screw rod 4 is in an interference fit with the O-ring, motion performance of the valve body may not be affected.

Due to the arrangement of the noise reduction component 8, the strength of the impact between the screw rod 4 and the nut 2 is reduced, thereby facilitating the reduction of the noise produced by the electronic expansion valve in operation.

In order to preventing collision friction occurring between the screw rod 4 and the sleeve ring 9 as well as between the screw rod 4 and the nut guiding section 22 during the operation of the valve body, the screw rod 4 is sized such that the screw rod 4 may not contact the sleeve ring 9 even in a maximum inclined state.

Meanwhile, in order to make the coaxality of the O-ring after being assembled meet the usage requirements of the product, the O-ring is configured to be movable in the axial direction, that is, a distance between the sleeve ring 9 and the nut 2 may be set to be slightly greater than the height of the O-ring, which ensures that the O-ring will not be stuck. During the operation of the electronic expansion valve, the position of the O-ring may slightly be adjusted by itself, thereby reducing the probability of the product being stuck.

The noise reduction component has been described above by taking the O-ring as an example. Certainly, besides the O-ring, it is possible to use a rectangular ring (that is, the longitudinal section is generally rectangular), as shown in Figure 4. Alternatively, it is possible to be in other suitable shape, as shown in Figure 5. It should be noted that those skilled in the art, based on the technical enlightenments of the present application, may make various suitable variations to the noise reduction component 8, and these variations should also be within the scope of the present application.

In addition, in the above specific description of the embodiments, the orientations such as "upper", "lower", "left", and "right" are described with reference to Figure 2, which should not be construed as limiting the present application.

It should be noted that the above embodiments are merely illustrative of the technical solutions of the present application and are not limitations. Although the present application has been described in detail with reference to the preferred embodiments, it will be understood by those skilled in the art that modifications or equivalent substitutions can be made to the technical solution of the present application without departing from the scope of the claims.

## Claims

1. An electronic expansion valve, comprising: a valve seat (1), a nut (2) arranged on the valve seat (1), a screw rod (4) in cooperation with the nut (2) by screw threads, a magnetic rotor (5) and a valve needle (3),
wherein with rotation of the magnetic rotor (5), the screw rod (4) drives the valve needle (3) to adjust a flow rate of a valve port of the electronic expansion valve,
**characterized in that**,
the nut (2) is provided with a nut guiding section (22), the screw rod (4) is provided with a screw rod guiding section (42) in cooperation with the nut guiding section (22), a noise reduction component (8) is provided at an end portion, close to the nut guiding section (22), of the nut (2) and is fastened by a sleeve ring (9).

2. The electronic expansion valve according to claim 1, wherein the sleeve ring (9) is of a cylindrical shape and is fixed to the nut (2) by an interference fit, and the noise reduction component (8) is enclosed in the sleeve ring (9).

3. The electronic expansion valve according to claim 2, wherein a distance between the sleeve ring (9) and the nut (2) is slightly larger than the height of the noise reduction component (8).

4. The electronic expansion valve according to claim 1, wherein the noise reduction component (8) is an O-ring or a rectangular ring.

5. The electronic expansion valve according to claim 3, wherein an interference fit is formed between an outer periphery of the noise reduction component (8) and an inner wall of the sleeve ring (9).

6. The electronic expansion valve according to claim 3, wherein an interference fit is formed between an inner periphery of the noise reduction component (8) and the screw rod (4).

## Patentansprüche

1. Elektronisches Expansionsventil, aufweisend: einen Ventilsitz (1), eine Mutter (2), die auf dem Ventilsitz (1) angeordnet ist, eine Schraubenspindel (4) in Zusammenspiel mit der Mutter (2) durch Schraubengewinde, einen Magnetrotor (5) und eine Ventilnadel (3),
wobei mit Drehung des Magnetrotors (5) die Schraubenspindel (4) die Ventilnadel (3) antreibt, um eine Flussrate eines Ventilanschlusses des elektronischen Expansionsventils anzupassen,
**dadurch gekennzeichnet, dass**
die Mutter (2) mit einem Mutterführungsabschnitt (22) bereitgestellt ist, die Schraubenspindel (4) mit einem Schraubenspindelführungsabschnitt (42) in Zusammenspiel mit dem Mutterführungsabschnitt (22) bereitgestellt ist, eine Lärmminderungskomponente (8) an einem Endbereich, nahe dem Mutterführungsabschnitt (22), der Mutter (2) bereitgestellt ist und durch einen Manschettenring (9) befestigt ist.

2. Elektronisches Expansionsventil nach Anspruch 1, wobei der Manschettenring (9) eine zylindrische Form hat und durch eine Presspassung an der Mutter (2) fixiert ist und die Lärmminderungskomponente (8) im Manschettenring (9) eingeschlossen ist.

3. Elektronisches Expansionsventil nach Anspruch 2, wobei ein Abstand zwischen dem Manschettenring (9) und der Mutter (2) ein wenig größer ist als die Höhe der Lärmminderungskomponente (8).

4. Elektronisches Expansionsventil nach Anspruch 1, wobei die Lärmminderungskomponente (8) ein O-Ring oder ein rechteckiger Ring ist.

5. Elektronisches Expansionsventil nach Anspruch 3, wobei eine Presspassung zwischen einem Außenumfang der Lärmminderungskomponente (8) und einer Innenwand des Manschettenrings (9) gebildet ist.

6. Elektronisches Expansionsventil nach Anspruch 3, wobei eine Presspassung zwischen einem Innenumfang der Lärmminderungskomponente (8) und der Schraubenspindel (4) gebildet ist.

## Revendications

1. Soupape de détente électronique, comprenant un siège de soupape (1), un écrou (2) agencé sur le siège de soupape (1), une tige filetée (4) qui coopère avec l'écrou (2) par l'intermédiaire de filets de vis, un rotor magnétique (5) et une aiguille de soupape (3),
dans laquelle, par l'intermédiaire d'une rotation du rotor magnétique (5), la tige filetée (4) entraîne l'aiguille de soupape (3) à régler un débit d'un port de soupape de la soupape de détente électronique,
**caractérisée en ce que** l'écrou (2) est pourvu d'une section de guidage d'écrou (22), la tige filetée (4) est pourvue d'une section de guidage de tige filetée (42) qui coopère avec la section de guidage d'écrou (22), un composant de réduction de bruit (8) est prévu à une partie d'extrémité, proche de la section de guidage d'écrou (22), de l'écrou (2) et est attaché par un anneau à manchon (9).

2. Soupape de détente électronique selon la revendication 1, dans laquelle l'anneau à manchon (9) est de forme cylindrique et est fixé à l'écrou (2) par un ajustement serré, et le composant de réduction de bruit (8) est enveloppé dans l'anneau à manchon (9).

3. Soupape de détente électronique selon la revendication 2, dans laquelle une distance entre l'anneau à manchon (9) et l'écrou (2) est légèrement plus grande que la hauteur du composant de réduction de bruit (8).

4. Soupape de détente électronique selon la revendication 1, dans laquelle le composant de réduction de bruit (8) est un joint torique ou un joint rectangulaire.

5. Soupape de détente électronique selon la revendication 3, dans laquelle un ajustement serré est formé entre une périphérie extérieure du composant de réduction de bruit (8) et une paroi intérieure de l'anneau à manchon (9).

6. Soupape de détente électronique selon la revendication 3, dans laquelle un ajustement serré est formé entre une périphérie intérieure du composant de réduction de bruit (8) et la tige filetée (4).
